# EUROPÄISCHE PATENTSCHRIFT

(11) **EP 0 966 344 B1**
(45) Veröffentlichungstag und Bekanntmachung des Hinweises auf die Patenterteilung: **23.05.2001**
(21) Anmeldenummer: 98912252.8
(22) Anmeldetag: 17.02.1998
(51) Int. Cl.: B29B 17/00, B29C 47/76, B29B 9/16

(54) **VERFAHREN ZUR ERZEUGUNG VON PET-RECYCLAT AUS FLAKES, SOWIE NACH DEM VERFAHREN ERZEUGTES PET-PRODUKT**
METHOD FOR RECYCLING PET FLAKES AND PET PRODUCT PRODUCED ACCORDING TO SAID METHOD
PROCEDE DE PRODUCTION D'UN RECYCLAT DE PET A BASE DE FLOCONS AINSI QUE PRODUIT EN PET FABRIQUE SELON CE PROCEDE

(30) Priorität: 12.03.1997 DE 19710098
(43) Veröffentlichungstag der Anmeldung: 29.12.1999
(73) Patentinhaber: OHL Apparatebau & Verfahrenstechnik GmbH, 65549 Limburg (DE)
(72) Erfinder: FREDL, Rüdiger, D-65549 Limburg (DE)
(74) Vertreter: Quermann, Helmut, Dipl.-Ing.
(86) Internationale Anmeldenummer: DE9800459
(87) Internationale Veröffentlichungsnummer: WO9840194

(56) Entgegenhaltungen:
- EP-A- 0 336 520
- EP-A- 0 347 706
- EP-A- 0 560 033
- DE-A- 4 034 459
- US-A- 3 619 145
- US-A- 3 804 811
- US-A- 4 255 295
- US-A- 5 597 891
- PATENT ABSTRACTS OF JAPAN vol. 012, no. 484 (M-776), 16.Dezember 1988 & JP 63 202408 A (TOSHIBA MACH CO LTD), 22.August 1988,
- PATENT ABSTRACTS OF JAPAN vol. 015, no. 447 (M-1179), 14.November 1991 & JP 03 190709 A (DIAFOIL CO LTD), 20.August 1991,

## Beschreibung

Die Erfindung betrifft ein Verfahren zur Erzeugung von Polyethylen-Terephthalat (PET)-Recyclat aus Flakes.

PET-Produkte finden vielfältig Verwendung, beispielsweise als Getränkeflaschen, qualifizierte Folien und Fasern, medizinische Geräte, insbesondere medizinische Spritzen und medizinische Behältnisse. Man ist bestrebt, diese möglichst vollständig im Wertstoff-Kreislauf zu führen, was aber bislang nicht möglich ist, da eine eventuell im Produkt verbliebene Restkontamination nicht völlig abgebaut werden konnte. Die auf dem Markt existierenden Methoden erlauben ausschließlich den Einsatz von PET-Recyclat in Anwendungsgebieten mit weniger qualifizierten Qualitätsansprüchen. Um höhere Qualitätsansprüche zu erfüllen, wird ein Verschnitt von einer im Verhältnis geringen Menge von PET-Recyclat mit einer im Verhältnis großen Mengen nicht recyclierten PET-Materials bei der Herstellung von PET-Flaschen erlaubt. Es ist auch bekannt geworden, Flaschen in drei Schichten herzustellen, wobei die Innenschicht durch das nicht recyclierte Produkt im Blasverfahren gebildet ist und die mittlere Tragschicht aus PET-Recyclat besteht.

Soll an PET-Produkte die Anforderung gestellt werden, daß sie ausschließlich aus Recyclat hergestellt werden, ist zu gewährleisten, daß das Recyclat nahezu ppm- (mg/kg) bzw. azetaldehydfrei ist. So werden unter Laborbedingungen aus PET-Produkten gewonnene Flakes kontaminiert, beispielsweise durch 1,1,1-Trichlorethan, Toluol, Chlorbenzol, Phenylcyclohexan und Benzophenon. Während des Recycelns sind diese Kontaminanten zu eliminieren bzw. völlig abzubauen.

Aus der DE 40 34 459 A1 ist ein Verfahren gemäß dem Oberbegriff des Patentanspruches 1 bekannt. Dieses betrifft die Aufbereitung thermisch beanspruchter Polyester-Abfälle. Die Abfälle werden zur Aufbereitung für die Wiederverwendung bei der Produktion von hochwertigen PET-Kunststoffen gehäckselt, gereinigt, sortiert und nachkondensiert. Der Häcksel umfaßt Polyester-Abfälle mit unterschiedlichen Molmassen und Veredelungsgraden. Der Häcksel wird aufgeschmolzen und die filtrierte Schmelze verfestigt und granuliert, das Granulat in fester Phase einer Nachkondensation unterzogen, bei der die Molmasse des Festphasenkondensats gegenüber der Ausgangsmolmasse des Granulats erhöht wird. Das aufkondensierte Granulat wird einem Extruder zugeleitet und zusammen mit Originalrohstoff zu Folien-, Spritz- und/oder Stranggußmaterial extrudiert. Die Festphasenkondensation erfolgt in einem Taumeltrockner bei einem Unterdruck von 0,1 mbar über eine Zeitspanne von etwa zwölf Stunden bei 200 bis 250° C. - Das Wesentliche des beschriebenen Verfahrens besteht darin, den Wiedereinsatz von Polyester-Abfällen aus verschiedenen Produktionen zu erreichen, wobei die üblichen Verluste in den mechanischen und optischen Eigenschaften durch Nachkondensation zum größten Teil wieder rückgängig gemacht werden können. Eine Reinigung der Polyester-Abfälle erfolgt durch Ausfiltern der Verschmutzungen bis zu einer Partikelgröße von 5 bis 10 *µ*m, sowie durch die Feststoff-Nachkondensation unter Vakuum. Hierdurch läßt sich aber keine Aufbereitung insoweit erreichen, daß aus dem PET-Recyclat, somit ohne Zusatz von Originalrohstoff, das neue PET-Produkt hergestellt werden kann. Das PET-Recyclat ist damit nicht geeignet, als alleiniger Ausgangsstoff zur Herstellung eines Produktes, das direkt mit Lebensmitteln in Kontakt kommt, zu dienen.

Aus der US-A-3 804 411 ist ein Verfahren zur Erzeugung von PET-Recyclat aus Flakes bekannt, wobei die Flakes extrudiert und granuliert werden und wobei anschließend eine Feststoff-Nachkondensation unter Vakuum erfolgt.

Aus der US-A-5 597 891 ist ein Verfahren zur Verminderung des Azetaldehydgehalts des Ausgangsproduktes für PET-Produkte bekannt. Dort erfolgt das Strippen durch Eindüsung von Inertgas in einem Doppelschneckenextruder mit drei Entgasungszonen.

Aufgabe der Erfindung ist es, ein Verfahren zur Erzeugung von PET-Recyclat aus Flakes anzugeben, das es ermöglicht, aus verunreinigten Flakes ein nahezu ppm- (mg/kg) bzw. azetaldehydfreies Ausgangsprodukt für PET-Produkte herzustellen.

Die Erfindung schlägt ein Verfahren zur Erzeugung von PET-Recyclat aus Flakes mit den Merkmalen des Patentanspruches 1 vor.

Das erfindungsgemäße Verfahren arbeitet zweistufig: Es werden zunächst die Flakes unter Vakuum extrudiert, womit bei diesem Verfahrensschritt unter Vakuum der Hauptbestandteil flüchtiger Nebenprodukte, wie Azetaldehyd und Oligomere, eliminiert wird. Die Extrusion und Granulation erfolgt als erster Verfahrensschritt, um zu erreichen, daß das extrudierte Produkt eine klar definierte Gestalt und Größe aufweist, sowie im Produkt sich die weitgehend gleiche Viskosität einstellt. Im weiteren Verfahrensschritt der Feststoff-Nachkondensation unter Vakuum, wird die verbleibende Restkontamination nahezu völlig abgebaut, so daß das dann erhaltene, recycelte Produkt unmittelbar das Ausgangsprodukt für das neue PET-Produkt darstellt. Es ist demnach nicht erforderlich, das neue PET-Produkt aus dem recycelten Produkt und einem hinzugesetzten Originalrohstoff herzustellen. Das PET-Recyclat ist damit als alleiniger Ausgangsstoff zur Herstellung eines Produktes, das direkt mit Lebensmitteln in Kontakt kommt, geeignet.

Bei dem erfindungsgemäßen Verfahren ist bei der Herstellung des Granulats aus dem Flakes und der anschließenden Behandlung des Granulats der Verfahrensschritt des Strippens vorgesehen. Es wird hierbei unter homogener Verteilung Inertgas, beispielsweise Stickstoff, und/oder Wasserdampf eingedüst, um im Prozeß eine größere Oberfläche zu schaffen, womit sich die flüchtigen Nebenprodukte/Kontaminanten stärker verteilen und damit optimal eliminiert werden können.

Gemäß der Erfindung werden die Flakes in einem Schneckenextruder, insbesondere Doppelschneckenextruder, mit differenzierten Entgasungszonen extrudiert und granuliert. Es sind drei Entgasungszonen vorgesehen. Das Vakuum wird in den beiden ersten Entgasungszonen mittels Flüssigkeitsringpumpen im Kreislauf und das Vakuum in der dritten Entgasungszone mittels eines Wälzkolbenpumpstandes erzeugt. Es ist so sichergestellt, daß in der letzten Entgasungszone ein besonders niedriger Druck herrscht.

Die Feststoff-Nachkondensation erfolgt unterhalb des Schmelzpunktes des Granulats, insbesondere bei einer Temperatur von 220 bis 250° C. Der Druck bei der Feststoff-Nachkondensation sollte im Bereich von 0,1 bis 0,01 mbar liegen. Die Feststoff-Nachkondensation erfolgt insbesondere über eine Dauer von zehn bis zwölf Stunden. Gemäß einer besonderen Ausgestaltung der Erfindung ist vorgesehen, daß die Feststoff-Nachkondensation des Granulats in einer rotierenden Trommel, insbesondere in einem Taumel-Trockner erfolgt. Die Drehzahl der Trommel beträgt insbesondere pro Minute 1 bis 5, insbesondere 2. Dies gewährleistet ein schonendes und gleichmäßiges Mischen des Granulates sowie dessen vorgegebene konstante Viskosität, was für die Erzielung der geforderten Parameter der PET-Produkte von entscheidender Bedeutung ist.

Anwendungsgebiet des erfindungsgemäßen Verfahrens ist insbesondere die Wertstoff-Rückführung von PET-Getränkeflaschen, die somit wieder hundertprozentig in den Kreislauf der Kunststoff-Flaschenproduktion als adäquater Rohstoff zurückgeführt werden. *Es* ist beispielsweise auch denkbar, daß dieser Kreislauf sich auf die Produktion von qualifizierten Kunststoffolien, qualifizierten Kunststoffasern und aus PET bestehenden medizinischen Geräten bezieht.

Bezogen auf die ppm-freie und azetaldehyd-freie Werkstoff-Rückführung in PET-Getränkeflaschen stellt sich das Verfahren zum Recyceln der Flaschen wie folgt dar: Nach entsprechenden Umläufen werden PET-Flaschen ausgemustert. Die Flaschen werden gepreßt, sortiert, gewaschen, mit diverser Peripherie-Behandlung, und gemahlen, wobei die gemahlenen Produkte, die sogenannten Flakes, die Ausgangsbasis für das erfindungsgemäße Verfahren bilden. Die Flakes werden in den Extruder, mit spezifischer Schneckenkonfiguration, mit differenzierten Entgasungszonen und entsprechender Vakua im vorgegebenen Temperaturbereich extrudiert, gestrippt und granuliert. Während dieses Verfahrensschrittes wird der Hauptbestandteil flüchtiger Nebenprodukte eliminiert. Die im Produkt verbleibende Restkontamination wird mittels des Verfahrens der Feststoff-Nachkondensation und des Strippens völlig abgebaut. In Abhängigkeit von Temperatur, Vakuum, Zeit und Strippen wird das Granulat in einem Taumel-Trockner, mit entsprechendem Zubehör, der ein schonendes und gleichmäßiges Mischen sowie eine konstante Vikosität garantiert, auf die für die PET-Flaschen-Produktion geforderten Parameter gebracht.

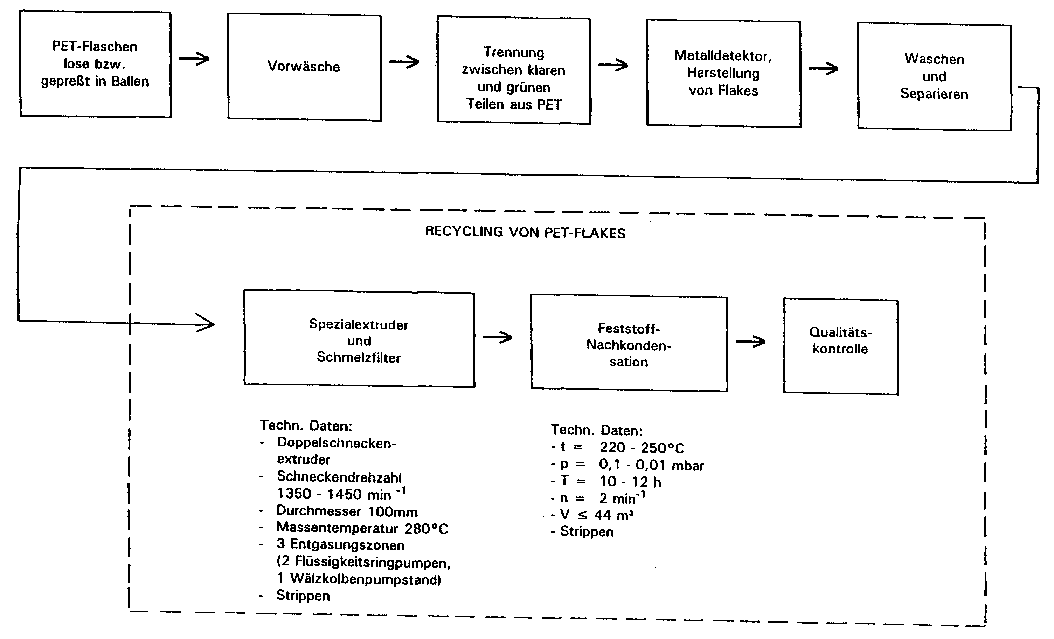

In der beigefügten einzigen Figur ist in einem Blockschaubild das erfindungsgemäße Verfahren betreffend Recycling von PET-Flakes beschrieben, wobei, bezogen auf den konkreten Anwendungsfall des Recycelns von PET-Flaschen, die Verfahrensvorgänge, ausgehend vom Ausmustern von PET-Flaschen nach entsprechenden Umläufen, bis zum Recyceln der aus diesen Flaschen gewonnenen PET-Flakes mit veranschaulicht sind.

Ausgemusterte PET-Flaschen werden lose oder in Ballen gepreßt angeliefert. Die Flaschen werden einer Vorwäsche unterzogen, dann erfolgt eine Trennung zwischen klaren und grünen Teilen aus PET. Ein Metalldetektor sondert metallische Bestandteile aus. Anschließend werden die PET-Flaschen gemahlen und hierbei die Flakes erzeugt. Diese werden gewaschen und separiert, wobei auch in diesem Verfahrensabschnitt eventuelle im Flakes-Gemisch vorhandene Metallteile entfernt werden. Durch die Vorwäsche und den eigentlichen Waschvorgang wird bereits ein wesentlicher Anteil der Kontaminanten entfernt, so daß nur diejenigen dem weiteren Recycling-Vorgang zugeführt werden, die tatsächlich am Material haften.

Die gewaschenen Flakes werden dem Spezialextruder mit Schmelzfilter zugeführt. Es handelt sich hierbei um einen Doppelschneckenextruder, der mit einer Schneckendrehzahl von 1350 bis 1450 min⁻¹ betrieben wird. Der Durchmesser der Schnecke beträgt beispielsweise 100 mm. Es sind im Extruder drei Entgasungszonen vorgesehen, den beiden ersten Zonen sind zwei Flüssigkeitsringpumpen zugeordnet, während in der letzten Entgasungszone ein Wälzkolbenpumpstand folgt. Die durch den Extruder gelangende PET-Masse wird auf eine Temperatur von beispielsweise 280° C aufgeheizt. Inertgas, wie Stickstoff, und/oder Wasserdampf wird unter homogener Verteilung eingedüst (Strippen). Das den Extruder verlassende Granulat wird einer Feststoff-Nachkondensation und Strippen unterzogen. Die Viskosität des PET-Materials wird hierbei wieder aufgebaut. Dies ist erforderlich, um aus dem recycelten PET-Produkt neue Flaschen blasen zu können, was nur in einem engen Viskositätsbereich möglich ist. Die Behandlung der Granulate erfolgt dabei in einem Taumel-Trockner, somit diskontinuierlich. Die zu behandelnde PET-Menge wird über einen bestimmten Zeitraum, der insbesondere zehn bis zwölf Stunden beträgt, im Taumel-Trockner gemischt. Das Arbeiten nach diesem Batch-System beinhaltet den Vorteil, daß PET-Flaschen diverser Hersteller, die unterschiedliche Viskosität aufweisen, recycelt werden können, wobei die fortwährende Mischung der PET-Granulate auch sicherstellt, daß die Viskosität auf einen definierten Mischwert eingestellt werden kann. Die Wirtschaftlichkeit des Feststoff-Nachkondensationsverfahrens im Batch-System ergibt sich aufgrund der Größe des Systems. Die Trommel weist beispielsweise ein Fassungsvermögen bis 44 m³ auf. Die Feststoff-Nachkondensation erfolgt in einem Temperaturbereich von 220 bis 250° C, somit einem ausreichenden Abstand vom Schmelzpunkt des Granulates. Die Trommel dreht sich langsam, beispielsweise zweimal pro Minute. In der Trommel herrscht ein Druck von 0,1 bis 0,01 mbar.

Nach der Feststoff-Nachkondensation erfolgt eine Qualitätskontrolle der recycelten PET-Flakes.

Versuche mit kontaminierten Flakes, bei denen die Konzentration der Kontaminanten (Toluol, Chlorbenzol, Phenylcyclohexan und Benzophenon) jeweils bis zu 1000 mg/kg lag, ergaben, daß das nachkondensierte Endprodukt nahezu ppm- (mg/kg) bzw. azetaldehyd-frei war.

## Patentansprüche

1. Verfahren zur Erzeugung von PET Recyclat aus Flakes durch Extrusion, Granulation und anschließende Feststoff-Nachkondensation des Granulats unter Vakuum und Strippen durch Eindüsen unter homogener Verteilung von Inertgas, wie Stickstoff, und/oder von Wasserdampf, **dadurch gekennzeichnet,** daß die Extrusion unter Vakuum und Strippen mittels eines Schneckenextruders, insbesondere eines Doppelschneckenextruders, mit drei differenzierten Entgasungszonen erfolgt, wobei das Vakuum in der ersten und in der zweiten Entgasungszone mittels Flüssigkeitspumpen und in der dritten Entgasungszone mittels einer Wälzkolbenpumpe erzeugt wird.

2. Verfahren nach Anspruch 1, **dadurch gekennzeichnet,** daß die Feststoff-Nachkondensation unterhalb des Schmelzpunktes des Granulates bei einer Temperatur von 220 bis 250° C erfolgt.

3. Verfahren nach Anspruch 1 oder 2, **dadurch gekennzeichnet,** daß die Feststoff-Nachkondensation bei einem Druck von 0,1 bis 0,01 mbar erfolgt.

4. Verfahren nach einem der Ansprüche 1 bis 3, **dadurch gekennzeichnet**, daß die Feststoff-Nachkondensation über eine Dauer von 10 bis 12 Stunden erfolgt.

5. Verfahren nach einem der Ansprüche 1 bis 4, **dadurch gekennzeichnet,** daß die Feststoff-Nachkondensation des Granulats in einer rotierenden Trommel erfolgt.

6. Verfahren nach Anspruch 5, **dadurch gekennzeichnet,** daß die Feststoff-Nachkondensation des Granulats in einem Taumel-Trockner erfolgt.

7. Verfahren nach einem der Ansprüche 1 bis 6, **dadurch gekennzeichnet,** daß die Drehzahl der Trommel pro Minute 1 bis 5, insbesondere 2 beträgt.

8. Verfahren nach einem der Ansprüche 1 bis 7, **dadurch gekennzeichnet,** daß die Flakes aus PET-Getränkeflaschen erzeugt werden.

## Claims

1. A process for producing recycled PET from flakes by the extrusion, granulation and subsequent solid recondensation of the granulated material under vacuum, and stripping by the injection of an inert gas such as nitrogen, and/or of steam; in a homogeneous distribution, **characterised in that** extrusion under vacuum end stripping are effected by means of a screw-type extruder, particularly a double screw extruder, which comprises three differentiated degassing zones, wherein a vacuum is produced in the first and in the second degassing zones by means of liquid ring pumps and a vacuum is produced in the third degassing zone by means of a rotary piston pump.

2. A process according to claim 1, **characterised in that** solid recondensation is effected below the melting point of the granulated material at a temperature from 220 to 250°C.

3. A process according to claims 1 or 2, **characterised in that** solid recondensation is effected at a pressure of 0.1 to 0.01 mbar.

4. A process according to any one of claims 1 to 3, **characterised in that** solid recondensation is effected for a duration of 10 to 12 hours.

5. A process according to any one of claims 1 to 4, **characterised in that** solid recondensation of the granulated material is effected in a rotating drum.

6. A process according to claim 5, **characterised in that** solid recondensation of the granulated material is effected in a tumble drier.

7. A process according to any one of claims 1 to 6, **characterised in that** the speed of rotation of the drum is 1 to 5 revolutions per minute, particularly 2 revolutions per minute.

8. A process according to any one of claims 1 to 7, **characterised in that** the flakes are produced from PET beverage bottles.

## Revendications

1. Procédé pour l'obtention d'un produit de recyclage de PET constitué par des flocons, par extrusion, granulation et condensation ultérieure des substances solides du produit de granulation sous vide et purification par injection, sous la forme d'une distribution homogène, d'un gaz inerte tel que l'azote et/ou de vapeur d'eau, caractérisé en ce que l'extrusion a lieu sous vide et la purification a lieu à l'aide d'une extrudeuse à vils sans fin, en particulier d'une extrudeuse à double vis sans fin comportant trois zones de dégazage différenciées, dans lequel on crée le vide dans la première et dans la deuxième zone de dégazage à l'aide de pompes hydrauliques et, dans la troisième zone de dégazage, à l'aide d'une pompe Roots.

2. Procédé selon la revendication 1, caractérisé en ce que la condensation ultérieure des substances solides a lieu en dessous du point de fusion du produit de granulation à une température de 220 à 250°C.

3. Procédé selon la revendication 1 ou 2, caractérisé en ce que la condensation ultérieure des substances solides a lieu sous une pression de 0,1 à 0,01 mbar.

4. Procédé selon l'une quelconque des revendications 1 à 3, caractérisé en ce que la condensation ultérieure des substances solides a lieu pendant un laps de temps de 10 à 12 heures.

5. Procédé selon l'une quelconque des revendications 1 à 4, caractérisé en ce que la condensation ultérieure des substances solides du produit de granulation a lieu dans un tambour rotatif.

6. Procédé selon la revendication 5, caractérisé en ce que la condensation ultérieure des substances solides du produit de granulation a lieu dans un sécheur excentrique.

7. Procédé selon l'une quelconque des revendications 1 à 6, caractérisé en ce que la vitesse de rotation du tambour s'élève de 1 à 5 rotations par minute, en particulier à 2 rotations par minute.

8. Procédé selon l'une quelconque des revendications 1 à 7, caractérisé en ce que les flocons sont obtenus à partir de bouteilles pour boissons en PET.
